# EUROPEAN PATENT SPECIFICATION

(11) **EP 3 079 995 B1**
(45) Date of publication and mention of the grant of the patent: **09.01.2019**
(21) Application number: 14810012.6
(22) Date of filing: 21.11.2014
(51) Int. Cl.: B65D 1/42, B29L 31/00

(54) **INJECTION-MOULDED PLASTIC CRATE AND METHOD THEREFOR**
SPRITZGEGOSSENE KUNSTSTOFFKISTE UND VERFAHREN DAFÜR
CAISSE EN PLASTIQUE MOULÉE PAR INJECTION ET SON PROCÉDÉ DE FABRICATION

(30) Priority: 12.12.2013 NL 2011948
(43) Date of publication of application: 19.10.2016
(73) Proprietor: Fikkert, Tom Franklin, 9752 VB Haren (NL)
(72) Inventor: FIKKERT, Tom Franklin, NL-9752 VB Haren (NL)
(74) Representative: Verdijck, Gerardus
(86) International application number: PCT/NL2014/050797
(87) International publication number: WO 2015/088330

(56) References cited:
- EP-A2- 1 705 128
- WO-A1-2009/075686
- US-A- 4 520 941
- US-A- 5 395 010
- US-A- 5 401 459
- US-A- 5 855 277

## Description

The invention relates to an injection-moulded plastic crate. Such crates are used to transport all kinds of articles, such as vegetables, fruit and flower bulbs. Plastic crates are known in practice which have a bottom and upright walls extending from the bottom. This is a rectangular bottom, wherein four upright walls are provided.

Such crates are often stacked. The bottom crate in the stack must be able to bear the weight of the crates with content above it. This is for instance more than 500 kg. This is standard for the design of the crate: any crate can after all be the bottom crate in the stack during use.

Crates are usually manufactured from polyethylene (also polythene). The crate is however given a relatively heavy form in order to be able to bear sufficient weight. This results in relatively high transport costs and likewise in relatively high production costs, since a relatively large amount of material has to be used. It is possible to produce the crates from the stiffer polypropylene. A polyethylene crate weighing about 1.7 kg has for instance a strength similar to that of a polypropylene crate of the same volume weighing only about 1.3 kg. Polypropylene has the drawback however that it becomes brittle at the low temperatures which are usual during use of the crate (for instance for vegetables, fruit and flower bulbs).

US 5 395 010 A describes a plastic bottle case in accordance with the preamble of appended claim 1, having four side walls, bottom and at least one handle formed in a side wall. Hollow reinforcing channels that are closed along their periphery are formed by gas injection in the bottle case at least in certain areas.

An object of the invention is to obviate or at least reduce the above stated problems by providing a lightweight crate which can nevertheless bear a relatively high weight.

This object is achieved with the injection-moulded plastic crate according to claim 1.

Giving the vertical ribs a hollow form increases the stiffness of the ribs. The construction is hereby strengthened and the crate can bear a greater load, while the weight of the crate is at the same time reduced by giving the ribs a hollow form.

The bottom is preferably substantially rectangular and four mutually connecting walls are provided. Four corners are hereby defined which can take a right-angled form or be rounded to some extent.

In a preferred embodiment the plastic comprises polyethylene (PE) and/or polypropylene polypropylene or other suitable plastic.

The crate is preferably injection-moulded in one part. This results in an advantage in production, whereby costs are saved. The crate is preferably injection moulded, wherein use is made of fluid injection for the purpose of forming the hollow rib. This results in a rapid production cycle. Shrinkage of the plastic during production is morcover prevented by the fluid that is present. The fluid is for instance a gas such as nitrogen or carbon dioxide, or a liquid such as water.

In a preferred embodiment the stiffening rib is arranged on the outer side of the at least one upright wall.

The stiffening rib preferably extends over substantially the whole height of the respective upright wall, i.e. from the bottom to an upper edge of the crate.

The rib extends for instance over the whole height, or a minimum of 95% of the height. The rib extends for instance from the bottom to a point 8-10 mm below the upper side of the crate.

In a preferred embodiment the width of the stiffening rib measured in the longitudinal direction of the upright wall amounts to a maximum of 12 mm, preferably a maximum of 10 mm and most preferably a maximum of 8 mm.

It is per se known to give thick parts of plastic objects a hollow form. Deformation of thick parts due to shrinkage of the plastic during curing is thus prevented. This is applied for instance in handles of crates. According to the invention however, a relatively thin part (a maximum of 12 mm) takes a hollow form. This is moreover a vertical rib which, because it takes a hollow form, is provided with an increased stiffness

In a further preferred embodiment the cavity in the stiffening rib has a diameter of a maximum of 6 mm, preferably a maximum of 5 mm and most preferably a maximum of 4 mm.

The width of the stiffening rib is preferably a maximum of 12 mm, a maximum of 10 mm, a maximum of 8 mm in combination with a cavity with a diameter of respectively a maximum of 6 mm, a maximum of 5 mm, a maximum of 4 mm.

The cavity in the stiffening rib preferably has substantially the same diameter over the length of the stiffening rib.

The cross-section of the cavity is preferably substantially round or elliptical.

The main part and the plate-like part are embodied integrally. The main part has for instance a substantially round cross-section, a substantially half-round cross-section or a substantially rectangular cross-section. Other shapes are however also possible according to the invention.

In a further preferred embodiment the width of the plate-like part measured in the direction along the upright wall amounts to a maximum of 5 mm, preferably a maximum of 4 mm, more preferably a maximum of 3 mm, still more preferably a maximum of 2 mm, and most preferably about 1.6 mm.

The at least one stiffening rib is arranged in a corncr of the cratc.

When crates are stacked, a large part of the load comes to bear on the corner parts of the crate. The stiffening rib in the corner therefore increases the load which the crate can bear.

The crate comprises a second rib or a profile which is arranged on at least one of the upright walls and runs obliquely relative to the stiffening rib in the corner of the crate. The second rib or the second profile is for instance located a greater distance from the stiffening rib at the bottom of the crate than on the upper side of the crate. This imparts extra strength to the crate.

The crate is preferably a stackable crate.

In a preferred embodiment the upright walls have an open structure. Alternatively or additionally, the bottom preferably likewise has an open structure. Openings are preferably provided in the upright walls. This reduces the weight of the crate, while not detracting from the stiffness of the walls. The open structure moreover enables ventilation of the crate, so that both air and moisture can flow into and out of the crate.

The invention also relates to a method for injection moulding the crate as described above, the method comprising of:
- injecting a melted plastic into a mould; and
- injecting the plastic with a fluid, such as a gas, such that the stiffening rib is embodied as a hollow rib.

The fluid can be a gas such as nitrogen or carbon dioxide, or a liquid such as water.

Gas-assisted injection moulding or water-assisted injection moulding is per se known in the prior art. This technique is however applied so as to give relatively thick parts (more than 2 cm) a hollow form. Handles, for instance in the field of plastic crates, often take a hollow form so as to thereby prevent deformation of the plastic through shrinkage. The invention relates however to giving relatively thin parts, i.e. the stiffening rib, a hollow form in order to thus increase the stiffness.

The cavity in the stiffening rib is preferably formed solely by the injected fluid. This means that no additional means, such as cores which are moved into and out of the mould, are required for the purpose of forming the hollow rib. This makes the method easy to perform and avoids high mould costs.

In a preferred embodiment the mould defines a flow leader for a uniform filling of the mould, which flow leader comprises the stiffening rib. The mould defines the form of the crate to be produced. When the plastic is injected into the mould, the plastic spreads from the injection point to the other parts of the mould. If the mould is not filled uniformly, this can have an effect on the product, which then has deviations from the desired design. So-called flow leaders and flow restrictors are applied in order to prevent this. A flow leader is a part which is thicker than adjacent parts, so that the plastic encounters less resistance in the flow leader during the injection moulding. The flow leaders are warmer than the adjacent parts during the injection moulding, so that the plastic flows more readily there. Injected fluid (gas or water) will likewise follow the path of least resistance and therefore flow via the flow leaders. The stiffening rib is formed according to the invention by such a flow leader.

The mould preferably comprises only one injection point. The injection point is preferably situated at a position corresponding to a substantially central position in the bottom of the crate. Flow leaders are for instance configured to extend from this central injection point in the bottom to the corner points of the crate for a uniform filling of the crate with the melted plastic. The fluid is preferably injected into the mould via the nozzle for injecting melted plastic. The fluid, such as a gas, substantially follows the flow leaders, whereby the stiffening ribs at the corner points of the crate are given a hollow form. In the case that flow leaders are also present in the bottom, hollow stiffening ribs are likewise formed in the bottom.

A constant pressure is preferably used for injection of gas.

A short-shot process is preferably applied. This entails a determined quantity of plastic being introduced into the mould which is per se insufficient to completely fill the mould. The mould is only completely filled by a fluid such as gas also being injected. The injection of the fluid such as gas can begin some time after filling of the mould has begun, or take place simultaneously. The material displaced by the fluid ultimately forms part of the crate. There can alternatively be a plurality of injection points for the fluid. Gas or water is for instance injected into one of the four corner points of the crate, this being advantageous when the ribs are provided at the corner points.

The same advantages and effects as described above in respect of the crate according to the invention apply for the method according to the invention.

Further advantages, details and effects of the invention will be described on the basis of exemplary embodiments thereof, wherein reference is made to the following figures:
Figure 1 shows an injection-moulded plastic crate according to the invention;
Figure 2 shows a detail of the plastic crate of figure 1; and
Figure 3 shows a side view of the crate according to figures 1 and 2.

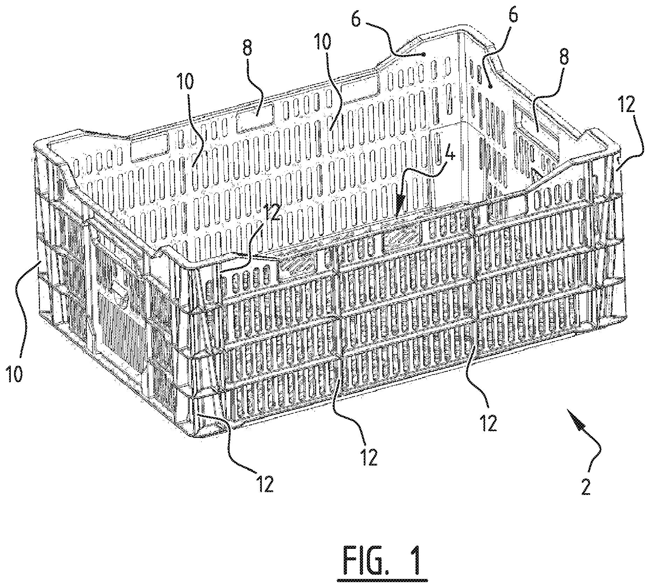

Crate 2 (figure 1) comprises a rectangular bottom 4 and four side walls 6. Upright walls 6 are provided with handles 8 which are formed as openings in walls 6. Each side wall moreover comprises ventilation openings 10. Ribs 12 are provided for the purpose of strengthening upright walls 6. In the shown embodiment ribs 12 are situated at the corner points and other locations of the crate.

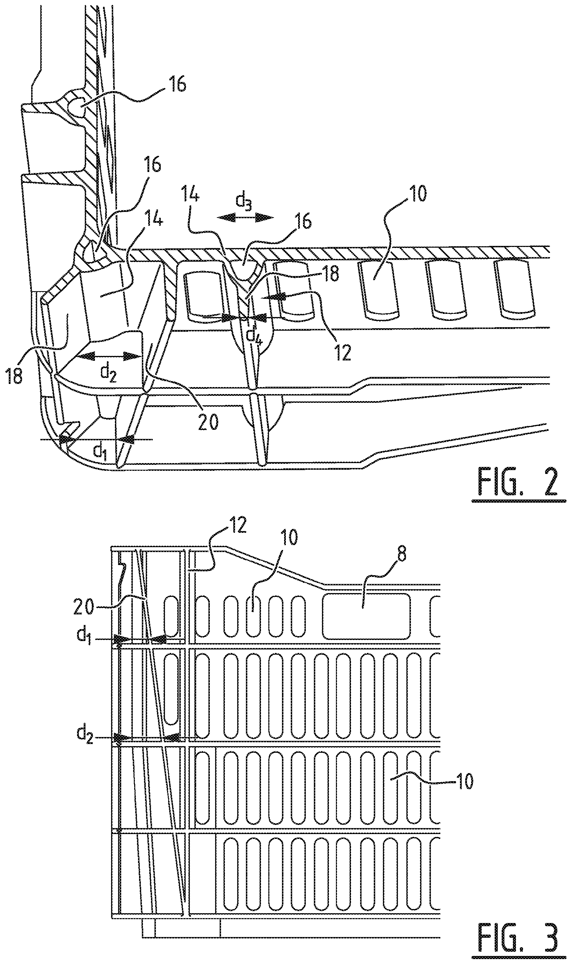

Each stiffening rib 12 comprises a main part 14 (figure 2) adjacent to upright wall 6, which main part takes a hollow form due to gas injection during injection moulding of crate 2. Cavity 16 is situated in this main part. The main part is formed integrally with plate-like part 18. The cross-section of the main part tapers in the direction of the outer side of the crate and transposes into plate-like part 18. Plate-like part 18 does not take a hollow form. It is noted that plate-like part 18 is optional, the ribs can also be embodied with main part 14 alone.

In the shown embodiment a rib 12 is situated at the corner point of the crate, wherein the plate-like part forms an angle of about 45 degrees relative to upright walls 6. A further rib 12 is provided on each wall close to the corner rib. A plate-like profile is arranged between the corner rib and the further rib. This profile has an inclining position. The upper side of the oblique profile here lies closer to the corner rib than the underside of the oblique profile. The distance d1 between the oblique profile and the corner rib measured at an upper side of the crate is smaller than a distance d2 between these parts measured at a lower position.

A crate according to the invention has for instance a weight of 1.2 kg and sufficient load-bearing capacity.

A crate according to the invention for instance realizes a load-bearing capacity of a minimum of 100 kg, preferably a minimum of 250 kg, more preferably a minimum of 500 kg, still more preferably a minimum of 1000 kg, still more preferably a minimum of 1500 kg and most preferably a minimum of 2000 kg.

Crate 2 is produced by injection moulding with gas injection. Provided for this purpose is a mould which defines the contours of crate 2. A determined quantity of liquid plastic, such as polyethylene or polypropylene, is injected into the mould via an injection point.

This quantity is in itself insufficient to wholly fill the mould. In other words, the space in the mould is greater than the volume of the injected plastic. The plastic will only be distributed fully over the mould by the gas injection.

The injection point is located at a position corresponding to the centre of the bottom of the crate. The mould defines flow leaders from the injection point to the corner points of the crate. Flow leaders for the stiffening rib are defined from this corner point. Shortly after injection of the plastic, or even simultaneously, gas is injected which is distributed over the mould via the flow leaders, wherein hollow parts are formed, including hollow rib 12.

The above-stated example describes the injection moulding with gas injection. According to the invention injection moulding is also possible with injection of a liquid, for instance water.

The invention is by no means limited to the above described preferred embodiments thereof. The rights sought are defined by the following claims, within the scope of which many modifications can be envisaged.

## Claims

1. Injection-moulded plastic crate (2), comprising:
- a bottom (4);
- upright walls (6) extending from the bottom (4);
- a substantially vertical stiffening rib (12) that is arranged on at least one of the upright walls (6), wherein the vertical stiffening rib (12) takes a hollow form, -**characterized in that** the at least one stiffening rib (12) comprises:
- a main part (14) adjacent to the upright wall (6) and comprising a cavity (16); and
- a plate-like part (18) extending outward from the main part (14),
wherein the width (d4) of the plate-like part (18) is narrower than the width (d3) of the main part (14), measured in the direction along the upright wall (6);
a plate like profile (20) that extends along the upright wall (6) from an upper end of the substantially vertical stiffening rib (12) to the bottom (4) under an angle with the substantially vertical stiffening rib (12), wherein the crate (2) comprises at least two vertical stiffening ribs (12), wherein a first one of the at least two vertical stiffening ribs (12) is positioned at a corner point of the crate (2) and a second of the at least two vertical stiffening ribs (12) is positioned on the upright wall (6) near the first rib (12), wherein the plate like profile (20) extends from the upper end of the first rib (12) to a lower end of the second rib (12).

2. Crate as claimed in claim1, wherein a distance (d1) between the plate like profile (20) and the first rib (12) measured at an upper side of the crate (2) is smaller than a distance (d2) between the plate like profile (20) and the first rib (12) at a lower end of the crate (2).

3. Crate (2) as claimed in any of the foregoing claims, wherein the plastic comprises polyethylene and/or polypropylene.

4. Crate (2) as claimed in any of the foregoing claims, wherein the stiffening rib (12) is arranged on the outer side of the at least one upright wall (6).

5. Crate (2) as claimed in any of the foregoing claims, wherein the stiffening rib (12) extends over substantially the whole height of the respective upright wall (6).

6. Crate (2) as claimed in any of the foregoing claims, wherein the crate (2) is injection-moulded in one part.

7. Crate (2) as claimed in any of the foregoing claims, wherein the width (d4) of the stiffening rib (12) measured in the longitudinal direction of the upright wall (6) amounts to a maximum of 12 mm, preferably a maximum of 10 mm and most preferably a maximum of 8 mm.

8. Crate (2) as claimed in claim7, wherein the cavity (16) in the stiffening rib (12) has a diameter of a maximum of 6 mm, preferably a maximum of 5 mm and most preferably a maximum of 4 mm.

9. Crate (2) as claimed in claim 1, wherein the width of the plate-like part (18) measured in the direction along the upright wall (6) amounts to a maximum of 5 mm, preferably a maximum of 4 mm, more preferably a maximum of 3 mm, still more preferably a maximum of 2 mm, and most preferably about 1.6 mm.

10. Crate (2) as claimed in any of the foregoing claims, wherein the crate is a stackable crate (2).

11. Crate (2) as claimed in any of the foregoing claims, wherein the upright walls (6) have an open structure.

12. Method for injection moulding a crate (2) as claimed in any of the foregoing claims, the method comprising of:
- injecting melted plastic into a mould; and
- injecting the plastic with a fluid, such as a gas, such that the stiffening rib (12) is embodied as a hollow rib.

13. Method as claimed in claim 12, wherein :
- the cavity (16) in the rib (12) is formed solely by the injected fluid; and/or
- the mould defines a flow leader for a uniform filling of the mould, which flow leader comprises the stiffening rib (12); and/or
- the mould comprises only one injection point, wherein preferably the injection point is situated at a position corresponding to a substantially central position in the bottom (4) of the crate (2).

## Patentansprüche

1. Spritzgegossene Kunststoffkiste (2), die aufweist:
- einen Boden (4);
- aufrechte Wände (6), die sich von dem Boden (4) erstrecken;
- eine im Wesentlichen vertikale Versteifungsrippe (12), die auf wenigstens einer der aufrechten Wände (6) angeordnet ist, wobei die vertikale Versteifungsrippe (12) eine hohe Form annimmt - **dadurch gekennzeichnet, dass** die wenigstens eine Versteifungsrippe (12) aufweist:
- einen Hauptteil (14), der benachbart zu der aufrechten Wand (6) ist und der einen Hohlraum (16) aufweist,
- einen plattenartigen Teil (18), der sich von dem Hauptteil (14) auswärts erstreckt,
wobei die Breite (d4) des plattenartigen Teils (18) in der Richtung entlang der aufrechten Wand (6) gemessen schmaler als die Breite (d3) des Hauptteils (14) ist;
ein plattenartiges Profil (20), das sich von einem oberen Ende der im Wesentlichen vertikalen Versteifungsrippe (12) entlang der aufrechten Wand (6) zu dem Boden (4) unter einem Winkel zu der im Wesentlichen vertikalen Versteifungsrippe (12) erstreckt, wobei die Kiste (2) wenigstens zwei vertikale Versteifungsrippen (12) aufweist, wobei eine Erste der wenigstens zwei vertikalen Versteifungsrippen (12) an einem Eckpunkt der Kiste (2) positioniert ist, und eine Zweite der wenigstens zwei vertikalen Versteifungsrippen (12) auf der aufrechten Wand (6) in der Nähe der ersten Rippe (12) positioniert ist, wobei das plattenartige Profil (20) sich von dem oberen Ende der ersten Rippe (12) zu einem unteren Ende der zweiten Rippe (12) erstreckt.

2. Kiste nach Anspruch 1, wobei ein Abstand (d1) zwischen dem plattenartigen Profil (20) und der ersten Rippe (12) an einer Oberseite der Kiste (2) gemessen kleiner als ein Abstand (d2) zwischen dem plattenartigen Profil (20) und der ersten Rippe (12) an einem unteren Ende der Kiste (2) ist.

3. Kiste (2) nach einem der vorhergehenden Ansprüche, wobei der Kunststoff Polyethylen und/oder Polypropylen aufweist.

4. Kiste (2) nach einem der vorhergehenden Ansprüche, wobei die Versteifungsrippe (12) auf der Außenseite der wenigstens einen aufrechten Wand (6) angeordnet ist.

5. Kiste (2) nach einem der vorhergehenden Ansprüche, wobei die Versteifungsrippe (12) sich im Wesentlichen über die gesamte Höhe der jeweiligen aufrechten Wand (6) erstreckt.

6. Kiste (2) nach einem der vorhergehenden Ansprüche, wobei die Kiste in einem Teil spritzgegossen ist.

7. Kiste (2) nach einem der vorhergehenden Ansprüche, wobei die Breite (d4) der Versteifungsrippe (12) in der Längsrichtung der aufrechten Wand (6) gemessen maximal 12 mm, vorzugsweise maximal 10 mm und am bevorzugtesten maximal 8 mm beträgt.

8. Kiste (2) nach Anspruch 7, wobei der Hohlraum (16) in der Versteifungsrippe (12) einen Durchmesser von maximal 6mm, vorzugsweise maximal 5 mm und am bevorzugtesten maximal 4 mm hat.

9. Kiste (2) nach Anspruch 1, wobei die Breite des plattenartigen Teils (18) in der Richtung entlang der aufrechten Wand (6) gemessen maximal 5 mm, vorzugsweise maximal 4 mm, bevorzugter maximal 3 mm, noch bevorzugter maximal 2 mm und am bevorzugtesten etwa 1,6 mm beträgt.

10. Kiste (2) nach einem der vorhergehenden Ansprüche, wobei die Kiste eine stapelbare Kiste (2) ist.

11. Kiste (2) nach einem der vorhergehenden Ansprüche, wobei die aufrechten Wände (6) eine offene Struktur haben.

12. Verfahren zum Spritzgießen einer Kiste (2) nach einem der vorhergehenden Ansprüche, wobei das Verfahren aufweist:
- Einspritzen von geschmolzenem Kunststoff in eine Form; und
- Einspritzen des Kunststoffs mit einem Fluid, wie etwa Gas, so dass die Versteifungsrippe (12) als eine Hohlrippe ausgebildet wird.

13. Verfahren nach Anspruch 12, wobei:
- der Hohlraum (16) in der Rippe ausschließlich durch das eingespritzte Fluid ausgebildet wird; und/oder
- die Form eine Fließführung für ein gleichmäßiges Füllen der Form definiert, wobei die Fließführung die Versteifungsrippe (12) aufweist; und/oder
- die Form nur einen Einspritzpunkt aufweist, wobei der Einspritzpunkt vorzugsweise an einer Position gelegen ist, die einer im Wesentlichen mittleren Position in dem Boden (4) der Kiste (2) entspricht.

## Revendications

1. Caisse en plastique moulée par injection (2) comprenant :
- un fond (4) ;
- des parois verticales (6) s'étendant depuis le fond (4) ;
- une nervure de renforcement sensiblement verticale (12) qui est agencée sur au moins une des parois verticales (6), dans laquelle la nervure de renforcement verticale (12) prend une forme creuse, **caractérisée en ce que** l'au moins une nervure de renforcement (12) comprend :
-- une partie principale (14) adjacente à la paroi verticale (6) et comprenant une cavité (16) ; et
-- une partie de type plaque (18) s'étendant vers l'extérieur depuis la partie principale (14),
dans laquelle la largeur (d4) de la partie de type plaque (18) est plus étroite que la largeur (d3) de la partie principale (14), mesurée dans la direction le long de la paroi verticale (6) ;
un profil de type plaque (20) qui s'étend le long de la paroi verticale (6) d'une extrémité supérieure de la nervure de renforcement sensiblement verticale (12) au fond (4) selon un angle avec la nervure de renforcement sensiblement verticale (12), dans laquelle la caisse (2) comprend au moins deux nervures de renforcement verticales (12), dans laquelle une première des au moins deux nervures de renforcement verticales (12) est positionnée sur un point de coin de la caisse (2) et une seconde des au moins deux nervures de renforcement verticales (12) est positionnée sur la paroi verticale (6) près de la première nervure (12), dans laquelle le profil de type plaque (20) s'étend depuis l'extrémité supérieure de la première nervure (12) à une extrémité inférieure de la seconde nervure (12).

2. Caisse selon la revendication 1, dans laquelle une distance (d1) entre le profil de type plaque (20) et la première nervure (12) mesurée sur un côté supérieur de la caisse (2) est plus petite qu'une distance (d2) entre le profil de type plaque (20) et la première nervure (12) à une extrémité inférieure de la caisse (2).

3. Caisse (2) selon l'une quelconque des revendications précédentes, dans laquelle le plastique comprend du polyéthylène et/ou du polypropylène.

4. Caisse (2) selon l'une quelconque des revendications précédentes, dans laquelle la nervure de renforcement (12) est agencée sur le côté supérieur de l'au moins une paroi verticale (6).

5. Caisse (2) selon l'une quelconque des revendications précédentes, dans laquelle la nervure de renforcement (12) s'étend sur sensiblement la hauteur entière de la paroi verticale respective (6).

6. Caisse (2) selon l'une quelconque des revendications précédentes, dans laquelle la caisse (2) est moulée par injection en une partie.

7. Caisse (2) selon l'une quelconque des revendications précédentes, dans laquelle la largeur (d4) de la nervure de renforcement (12) mesurée dans la direction longitudinale de la paroi verticale (6) s'élève à un maximum de 12 mm, de préférence un maximum de 10 mm et de manière préférée entre toutes un maximum de 8 mm.

8. Caisse (2) selon la revendication 7, dans laquelle la cavité (16) dans la nervure de renforcement (12) présente un diamètre d'un maximum de 6 mm, de préférence un maximum de 5 mm et de manière préférée entre toutes un maximum de 4 mm.

9. Caisse (2) selon la revendication 1, dans laquelle la largeur de la partie de type plaque (18) mesurée dans la direction le long de la paroi verticale (6) s'élève à un maximum de 5 mm, de préférence un maximum de 4 mm, de manière davantage préférée un maximum de 3 mm, de manière encore davantage préférée un maximum de 2 mm, et de manière préférée entre toutes à environ 1,6 mm.

10. Caisse (2) selon l'une quelconque des revendications précédentes, dans laquelle la caisse est une caisse empilable (2).

11. Caisse (2) selon l'une quelconque des revendications précédentes, dans laquelle les parois verticales (6) présentent une structure ouverte.

12. Procédé pour le moulage par injection d'une caisse (2) selon l'une quelconque des revendications précédentes, le procédé comprenant :
- l'injection de plastique fondu dans un moule ; et
- l'injection du plastique avec un fluide, tel qu'un gaz, de sorte que la nervure de renforcement (12) soit réalisée en tant que nervure creuse.

13. Procédé selon la revendication 12, dans lequel :
- la cavité (16) dans la nervure (12) est uniquement formée par le fluide injecté ; et/ou
- le moule définit un conducteur de flux pour un remplissage uniforme du moule, lequel conducteur de flux comprend la nervure de renforcement (12) ; et/ou
- le moule comprend un seul point d'injection, dans lequel de préférence le point d'injection est situé sur une position correspondant à une position sensiblement centrale dans le fond (4) de la caisse (2).
